# EUROPÄISCHE PATENTSCHRIFT

(11) **EP 2 853 878 B1**
(45) Veröffentlichungstag und Bekanntmachung des Hinweises auf die Patenterteilung: **14.11.2018**
(21) Anmeldenummer: 14186509.7
(22) Anmeldetag: 26.09.2014
(51) Int. Cl.: G01M 17/007

(54) **Kraftfahrzeugprüfsystem**
Motor vehicle testing system
Système de contrôle de véhicule automobile

(30) Priorität: 26.09.2013 DE 102013219471
(43) Veröffentlichungstag der Anmeldung: 01.04.2015
(73) Patentinhaber: MAHA Maschinenbau Haldenwang GmbH & Co. KG, 87490 Haldenwang (DE)
(72) Erfinder: Beaujean, Frank, 87542 Altusried (DE); Oberndorfer, Stefan, 87435 Kempten (DE); Seifert, Alexander, 87437 Kempten (DE); Wendl, Stefan, 87487 Wiggensbach (DE); Hernandes Gonzales, Andres, 87463 Dietmannsried (DE)
(74) Vertreter: MERH-IP Matias Erny Reichl Hoffmann Patentanwälte PartG mbB

(56) Entgegenhaltungen:
- EP-A2- 0 977 010
- GB-A- 1 469 592
- JP-A- H09 243 521

## Beschreibung

Die vorliegende Erfindung betrifft ein Kraftfahrzeugprüfsystem, das eine Hebevorrichtung mit einer integrierten Rollenprüfeinrichtung aufweist, so dass neben den üblichen Sichtprüfungen, für die das Kraftfahrzeug beispielsweise mittels einer Hebebühne angehoben wird, gleichzeitig eine Prüfung z.B. der sicherheitsrelevanten Fahrprüfassistenten bzw. der Fahrerassistenzsysteme des Kraftfahrzeuges zeitsparend möglich ist. Die sicherheitsrelevanten Fahrprüfassistenten können simulativ angesprochen werden während das Kraftfahrzeug auf dem Kraftfahrzeugprüfsystem angeordnet ist. Für die Prüfung der sicherheitsrelevanten Fahrprüfassistenten waren bislang zusätzliche, großbauende Prüfstände erforderlich.

Bis dato ist es üblich, dass Hebebühnen für Sichtprüfungen und für Reparaturarbeiten von Kraftfahrzeugen verwendet werden. Prüfungen der Fahrprüfassistenten eines Kraftfahrzeuges, z.B. eines elektronischen Schleuderkontrollsystems, finden bis dato auf gesonderten Prüfständen statt. Werkstätten und Prüfbetriebe müssen daher mehrere Prüfvorrichtungen bzw. Prüfstände besitzen, was sowohl teuer als auch im Hinblick auf die benötigte Stellfläche nachteilig ist. DerZeitaufwand, den die Prüfvorgänge erfordern, ist ferner hoch, da das Kraftfahrzeug beispielsweise zunächst für die Sichtprüfung auf der Hebebühne angeordnet werden muss und nach der Sichtprüfung aufwendig z.B. auf ei nem Rollenprüfstand aufgestellt werden muss.

GB 1469 592 A beschreibt ein Kraftfahrzeugprüfsystem gemäß dem Oberbegriff des Patentanspruchs 1.

EP 0 977 010 A2 und JP H09 243521 A beschreiben jeweils Prüfsysteme, bei denen die den Kraftfahrzeugreifen aufnehmenden Rollen bzw. Abstellflächen durch ein Verfahren der Abstellfläche bzw. der Rollen auf die Kraftfahrzeugabmessungen angepasst werden können.

Es ist eine Aufgabe der vorliegenden Erfindung ein Kraftfahrzeugprüfsystem und
ein Verfahren zur Prüfung von Kraftfahrzeugen mittels des Kraftfahrzeugprüfsystems anzubieten, das die Funktionen einer Hebebühne und weiterer Prüfstände zur Prüfung von Fahrprüfassistenten des Kraftfahrzeuges miteinander vereint, so dass eine umfangreichere Kraftfahrzeugprüfung mit weniger Prüfschritten und in kürzerer Zeit ermöglicht wird und auch komplexe Fahrzeugprüfprogramme durchgeführt werden können, insbesondere Prüfprogramme, die Lenkbewegungen, Brems- und Beschleunigungsvorgängen beinhalten.

Die Aufgabe wird von der Erfindung gemäß den unabhängigen Patentansprüchen gelöst. Bevorzugte Weiterentwicklungen der Erfindung sind in den abhängigen Patentansprüchen beschrieben.

Das erfindungsgemäße Kraftfahrzeugprüfsystem kann eine erste Hebevorrichtung zum Anheben eines Kraftfahrzeuges aufweisen und eine Rollenprüfeinrichtung, die zumindest eine positionierbare bzw. verfahrbare Rolle aufweisen kann. Ferner kann ein zu prüfendes Kraftfahrzeug mittels der ersten Hebevorrichtung zumindest soweit anhebbar sein, dass Räder des Kraftfahrzeuges zumindest teilweise entlastet sein können. Die zumindest eine Rolle kann derart positionierbar sein, dass sie in Kontakt mit zumindest einem der entlasteten Räder des Kraftfahrzeuges bringbar sein kann.

Der erfindungsgemäße Aufbau des Kraftfahrzeugprüfsystems erlaubt eine Kombination von herkömmlichen Sichtprüfungen und dgl. und Funktionsprüfungen eines Kraftfahrzeuges. Die Funktionsprüfungen können insbesondere Prüfungen der Fahrprüfassistenten bzw. der Fahrerassistenzeinrichtungen des Kraftfahrzeuges umfassen. Beispielsweise können Fahrprüfassistenten, wie z.B. die elektronische Schleuderkontrolle, ein Kurvenlichtsystem, Kraftfahrzeugbremseinrichtungen, insbesondere ABS, eine elektronische Schleuderkontrolle, eine Antriebsschlupfregelung und ein indirektes Reifendruckkontrollsystem, zeitsparend durchgeführt werden während das Kraftfahrzeug auf dem Kraftfahrzeugprüfsystem angeordnet ist. Es kann somit eine umfangreichere Kraftfahrzeugprüfung innerhalb kürzerer Zeit und mit weniger Aufwand durchgeführt werden. Das Entlasten der Räder und das In-Kontakt-bringen der Rolle mit dem zumindest teilweise entlasteten Rad ermöglicht, dass bereits mit kompakten, kleinbauenden Rollenmotoren das Rad mittels der Rolle angetrieben werden kann. Es können komplexe Funktionsprüfungen des Kraftfahrzeuges, bei denen das Rad beschleunigt, abgebremst oder gelenkt wird, durchgeführt werden.

Das in-Kontakt-Bringen der Rolle mit den zumindest teilweise entlasteten Rädern bzw. Reifen ermöglicht, dass eine oder mehrere Kraftfahrzeug-Funktionsprüfungen, beispielsweise der elektronische Schleuderkontrolle, der Kurvenlichtsysteme und/oder dgl., an dem zumindest teilweise angehobenen Kraftfahrzeug durchgeführt werden können.

Der Begriff "positionierbare bzw. verfahrbare Rolle" soll insbesondere bedeuten, dass die Rolle im Hinblick auf ihre Positionierung in einer vertikalen und/oder horizontalen Position veränderbar ist. "Entlasten" der Räder soll insbesondere bedeuten, dass das Kraftfahrzeug so angehoben wird, dass die Räder des angehobenen Kraftfahrzeuges nur einen Teil des Kraftfahrzeuggewichtes tragen oder vollständig vom Kraftfahrzeuggewicht entlastet sind.

Ferner kann die erste Hebevorrichtung zumindest eine Hebeeinrichtung aufweisen, die an einem Werkstattboden oder in einer Werkstattgrube angeordnet sein kann. Die Hebeeinrichtung kann dazu eingerichtet sein, ein Kraftfahrzeug derart von dem Wertstattboden oder einem Grubenboden anzuheben, dass die Räder zumindest teilweise von einem Eigengewicht des Kraftfahrzeuges entlastet sind. Die Hebeeinrichtung kann bevorzugt eine Scherenhebebühne, eine Hubstempel-Bühne und/oder eine Säulenhebebühne umfassen.

Diese Ausgestaltung des Kraftfahrzeugprüfsystems kann somit die Möglichkeit umfassen, das Kraftfahrzeug direkt von einem Boden einer Werkstatt bzw. einer Grube abzuheben, ohne dass die Notwendigkeit besteht, das Kraftfahrzeug auf anhebbaren Fahrschienen abzustellen. Dies kann beispielsweise dadurch realisiert werden, dass die erste Hebevorrichtung ein auf einem Boden einer Werkstatt bzw. einer Grube aufgestellter Radfreiheber oder eine Säulenhebebühne ist. Die Rollenprüfeinrichtung kann auch unmittelbar auf dem Boden der Werkstatt bzw. der Grube angeordnet werden.

Ferner kann die erste Hebevorrichtung ein Radfreiheber sein und auf einer zweiten Hebevorrichtung angeordnet sein. Die zweite Hebevorrichtung kann zumindest eine Fahrschiene zum Aufnehmen des zu prüfenden Kraftfahrzeugs und zumindest einen Hubmittel zum Anheben der Fahrschiene aufweisen.

Die zweite Hebevorrichtung kann bevorzugt eine Scherenhebebühne sein, die auf den Fahrschienen montierte Radfreiheber aufweisen kann. Die Rolle bzw. die Rollen zur Durchführung der Funktionsprüfungen können bevorzugt von einer Oberfläche der Fahrschiene(n) aus zu den Rädern hin verfahren werden.

Ferner können zumindest zwei Rollenprüfeinrichtungen an der Fahrschiene angeordnet sein. Zumindest eine Rollenprüfeinrichtung kann einem Vorderrad und zumindest eine Rollenprüfeinrichtung kann einem Hinterrad des Kraftfahrzeuges zuordenbar sein.

Die Anordnung von zwei Rollenprüfeinrichtungen je Fahrschiene ermöglicht, dass an den Vorder- und dem Hinterrädern des Kraftfahrzeugs eine Rolle angeordnet werden kann, so dass eine hohe Flexibilität hinsichtlich der Durchführung verschiedener Prüfungsvorgänge ermöglicht wird. Mit dieser Anordnung können z.B. sowohl hinterrad- als auch vorderradangetriebene Kraftfahrzeuge geprüft werden. Ebenso können auch Allradfahrzeuge geprüft werden.

Zumindest eine der Rollenprüfeinrichtungen kann entlang einer Längsrichtung der Fahrschiene verschiebbar gelagert sein, so dass eine erhöhte Flexibilität bei der Radstandanpassung auf verschiedene Kraftfahrzeugtypen ermöglicht wird. Bevorzugt kann die entlang einer Längsrichtung der Fahrschiene verschiebbare Rollenprüfeinrichtung in eine Führungsnut eingreifen, die jeweils an den Seitenkanten der Fahrschiene angeordnet sein kann, so dass die Rollenprüfeinrichtung entlang der Führungsnut verschiebbar gelagert werden kann.

Ferner kann die zumindest eine der Rollenprüfeinrichtungen auch auf einem Werkstattboden oder Grubenboden, insbesondere in Längsrichtung eines zu prüfenden Kraftfahrzeuges, verschiebbar gelagert sein. Dies wird bevorzugt, wenn die Rollenprüfeinrichtung auf dem Boden angeordnet ist; beispielsweise, wenn nur eine erste Hebevorrichtung vorgesehen ist. Das Verschieben der Rollenprüfeinrichtung kann sowohl manuell als auch mittels eines Antriebsmotors erfolgen.

Ferner kann eine erste Rollenprüfeinrichtung zumindest eine antreibbare Rolle und eine Positioniervorrichtung, die dazu geeignet sein kann, eine Position der antreibbaren Rolle zu verändern, aufweisen.

"Antreibbar" bedeutet in diesem Zusammenhang, dass die Rolle um ihre Achse rotiert werden kann. Die Positioniervorrichtung ermöglicht beispielweise eine Verschiebung der Rolle in vertikaler und/oder horizontaler Richtung, so dass die Rolle in Kontakt mit einem Kraftfahrzeugrad bringbar ist.

Die antreibbare Rolle der ersten Rollenprüfeinrichtung, die einem Vorderrad oder Hinterrad zuordenbar sein kann, kann von einer Halteeinrichtung gehalten werden, die an einem Ende mittels eines Drehlagers gelagert sein kann. Die antreibbare Rolle kann an einem dem Drehlager entgegengesetzten Ende angeordnet sein.

Die Halteeinrichtung und das Drehlager können Teil der Positioniervorrichtung sein. Die Halteeinrichtung weist bevorzugt ein im Wesentlichen stab- oder balkenförmiges Mittel auf, das an einem Ende drehbar an dem Drehlager angeordnet ist und an einem anderen Ende die antreibbare Rolle hält. Die Halteeinrichtung kann gegenüber einer Fahrschienenoberfläche verschwenkbar gelagert sein.

Ferner kann ein Abstand zwischen dem Drehlager und der antreibbaren Rolle der ersten Rollenprüfeinrichtung veränderbar sein. Die Halteeinrichtung kann teleskopierbar ausgeführt sein, um den Abstand zwischen dem Ende, das die antreibbare Rolle hält, und dem Ende, das an dem Drehlager angeordnet ist, einstellbar auszuführen.

Diese Anordnung erlaubt in technisch vorteilhafter Weise, dass die antreibbare Rolle sehr flexibel positioniert werden kann. Dies ist besonders von Vorteil, wenn unterschiedliche Kraftfahrzeugtypen geprüft werden, da die flexible Positionierungsmöglichkeit stets erlaubt, dass die Rolle optimal mit einer Mantelfläche des Rades/Reifes eines zu prüfenden Kraftfahrzeuges in Kontakt bringbar ist.

Die Halteeinrichtung kann zur Einstellung des Abstandes zwischen dem Drehlager und der antreibbaren Rolle teleskopierbar ausgeführt sein und ferner ist es bevorzugt möglich, dass ein Teleskopausschub der Halteeinrichtung elastisch nachgebend ausgeführt ist. Der Teleskopausschub bezeichnet insbesondere den Teil der Halteeinrichtung, der bei einem Teleskopieren aus- bzw. eingefahren wird, bzw. den oben genannten Abstand zwischen dem Drehlager und der antreibbaren Rolle. Beispielsweise kann der Teleskopausschub ein zweites Gehäuse der Halteeinrichtung umfassen, an dem die antreibbare Rolle angeordnet sein kann.
Die Teleskopfunktion kann bevorzugt mittels hydraulischer oder pneumatischer Einrichtungen bereitgestellt werden, die den Teleskopausschub verfahren können. Bevorzugt kann die Rolle mit einer einstellbaren Anpresskraft gegen die Reifenoberfläche bzw. das Rad gedrückt werden. Die Anpresskraft kann bevorzugt mittels eines Einsteuer-Drucks eines pneumatischen oder hydraulischen Zylinders der hydraulischen oder pneumatischen Einrichtung variable eingestellt werden. Die Rolle kann während der Prüfung bevorzugt mit mindestens 30 N gegen die Reifenoberfläche gedrückt werden. Die Anpresskraft kann auch höher oder niedriger als 30 N eingestellt werden. Beispielsweise werden Werte von >=300 N besonders bevorzugt. Der optimale Wert der Anpresskraft ist der, der es erlaubt, dass die Rolle/Halteeinrichtung hinreichend sensitiv auf eine Auslenkung des Reifens nachgibt und gleichzeitig ein ausreichender Anpressdruck zwischen Rolle und Reifen aufgebaut werden kann, um z.B. eine Drehmoment von der Rolle auf den Reifen übertragen zu können.
Das Nachgeben in elastischer Art und Weise ist eine bevorzugte Möglichkeit gemäß der Erfindung. Der Begriff "Nachgeben" des Teleskopausschubes soll insbesondere bedeuten, dass bei einer Krafteinwirkung auf die Halteeinrichtung, die gegen den Teleskopausschub wirkt, der Teleskopausschub dadurch nachgibt, dass der Teleskopausschub einfährt bzw. kürzer wird. Dadurch wird auch die Position der antreibbaren Rolle verändert, insbesondere wird dadurch der Abstand zwischen der antreibbaren Rolle und dem Drehlager verkürzt. Wenn die Kraft, die z.B. aufgrund einer Auslenkung der Radposition bei einer Lenkbewegung des Kraftfahrzeuges erzeugt wird, wieder entfällt, dann kann der Teleskopausschub elastisch wieder auf die Position bzw. Länge ausfahren, die dieser vor der Krafteinwirkung hatte.

Das oben beschriebene (elastische) Nachgeben des Teleskopausschubes bzw. der Halteeinrichtung ermöglicht vorteilhaft, dass z.B. auch Lenkbewegungen während der Funktionsprüfung des Kraftfahrzeuges ausgeführt werden können.

Es kann eine zweite Rollenprüfeinrichtung vorgesehen sein, die einem Vorder- oder Hinterrad zuordenbar sein kann. Bevorzugt sind jeweils eine erste und zweite Rollenprüfeinrichtung jeweils einem Rad eines Kraftfahrzeuges auf einer Fahrzeugseite zuordenbar. Bei vierrädrigen Kraftfahrzeugen können vier Rollenprüfeinrichtungen vorgesehen sein. Die zweite Rollenprüfeinrichtung kann zumindest zwei in einem Rahmen achsparallel zueinander angeordnete Rollen aufweisen, von denen zumindest eine Rolle antreibbar sein kann.

Die Anordnung zweier achsparalleler Rollen ermöglicht, dass ein Kraftfahrzeugrad zwischen den beiden Rollen angeordnet werden kann und dort von den Rollen in Position gehalten werden kann. Mittels der zumindest einen antreibbaren Rolle kann eine Rotation von der Rolle auf das Rad, oder andersherum, übertragen werden.

Besonders bevorzugt wird gemäß der Erfindung eine Anordnung, bei der für jedes Fahrzeugrad, d.h. Vorder- und Hinterräder, die ersten Rollenprüfeinrichtungen vorgesehen sind. Die ersten Rollenprüfeinrichtungen sind sehr flexibel mit dem Reifen in Kontakt bringbar, weil sowohl die vertikale als auch die horizontale Positionierung wenig komplex mittels Aufschwenkens der Halteeinrichtung vorgenommen werden kann. Die ersten Rollenprüfeinrichtungen sind ferner leichtgängig von Hand positionierbar.

Ein Rahmen der zweiten Rollenprüfeinrichtung kann in vertikaler Richtung verfahrbar gelagert sein, so dass ein Abstand der Rollen zu einer Oberfläche der Fahrschiene oder einem Werkstatt- oder Grubenboden einstellbar sein kann.

Diese Anordnung erlaubt es, dass, wenn das Kraftfahrzeug mittels des Radfreihebers von der Oberfläche der Fahrschiene oder dem Werkstatt- oder Grubenboden abgehoben ist, die Rollen zum Rad hin verfahrbar sind, um Kontakt zwischen den Rollen und dem Rad herzustellen, so dass Rollenprüfstandsprüfungen an den zumindest teilweise entlasteten Rädern durchgeführt werden können. Ferner wird die mechanische Belastung des Prüfsystems reduziert, so dass die Lebensdauer erhöht wird.

Die antreibbaren Rollen können mittels eines Trommelmotors, der innerhalb der Rollen angeordnet sein kann, antreibbar sein. Die Haltevorrichtung und der Rahmen können ferner mittels Elektromotoren, bevorzugt Linearmotoren, in ihrer Position veränderbar sein. Insbesondere die Verwendung von Trommelmotoren ermöglicht, dass die antreibbaren Rollen sehr kompakt gestaltet werden können, da kein zusätzlicher externer Motor vorgesehen werden muss.

Die Hebebühne kann ferner an eine Steuereinheit angeschlossen sein bzw. mit dieser verbunden sein, die dazu geeignet sein kann, u.a. die Motoren der Hebebühne und/oder der antreibbaren Rollen jeweils anzusteuern. Eine solche Steuereinheit kann auch ein Steuerpult umfassen, das dem Bediener ermöglicht, die Hebebühne aus der Entfernung zu steuern.

Ferner kann eine dritte Rollenprüfeinrichtung vorgesehen sein, die ein horizontal angeordnetes Laufband aufweist. Ferner kann eine vertikale Position des horizontalen Laufbandes, insbesondere eine Relativposition zu der Oberfläche der Fahrschiene oder einem Werkstatt- bzw. Grubenboden, einstellbar sein.

Besonders bevorzugt kann das Kraftfahrzeugprüfsystem eine Kombination zweier erster Rollenprüfeinrichtungen und zweier dritter Rollenprüfeinrichtungen aufweisen, wobei besonders bevorzugt die ersten Rollenprüfeinrichtungen jeweils einem Vorderrad des Kraftfahrzeuges zugeordnet sein können und die dritten Rollenprüfeinrichtungen jeweils einem Hinterrad des Kraftfahrzeuges zugeordnet sein können. Bei dieser möglichen Kombination weist das Kraftfahrzeugprüfsystem folglich lediglich erste und dritte Rollenprüfeinrichtungen auf. Es sei an dieser Stelle angemerkt, dass die Begriffe erste, zweite und dritte Rollenprüfeinrichtung zur Unterscheidung der möglichen Bauformen verwendet werden, aber keinen Hinweis auf mögliche Kombinationen implizieren sollen.

Das Laufband der dritten Rollenprüfeinrichtung kann um zwei Rollen geschlungen sein, von denen zumindest eine Rolle antreibbar sein kann, so dass das Laufband angetrieben werden kann. Die Rollen können in einem Bandeinheitsrahmen angeordnet sein, der beispielweise mittels hydraulischer oderpneumatischer Mittel und/oder eines elektrischen Linearmotors (Hebemittel) vertikal verfahren werden kann. Das vertikale Verfahren ermöglicht folglich, dass die vertikale Position des Laufbandes einstellbar ist. Das vertikale Positionieren/Einstellen des Laufbandes ermöglicht, dass das Laufband bzw. dessen Obertrum in Kontakt mit dem zumindest teilweise entlasteten Rad des angehobenen Kraftfahrzeuges gebracht werden kann, so dass das Rad mittels des Laufbandes z.B. beschleunigt oder abgebremst werden kann.

Ferner kann die Länge der dritten Rollenprüfeinrichtung so bemessen sein, dass die gesamte Fläche der Hinterachse eines Kraftfahrzeuges abgedeckt wird. Mit anderen Worten bedeutet dies, dass die Länge der dritten Rollenprüfeinrichtung so bemessen sein kann, dass alle typischen Radstände von zu prüfenden Kraftfahrzeuges abgedeckt werden und damit ein Verschieben der dritten Rollenprüfeinrichtung bzw. ein Anpassen auf den Radstand vorteilhafterweise entfallen kann. Die Länge der dritten Rollenprüfeinrichtung kann bevorzugt mittels des Abstandes zwischen den beiden Rollen eingestellt sein, um die das Laufband herum geschlungen ist.

Ein Achsspieltester kann ferner auf der Fahrschiene angeordnet sein, auf dem zumindest ein Vorderrad des zu prüfenden Kraftfahrzeuges anordenbar sein kann. Der Achsspieltester ermöglicht die Integration weiterer Prüffunktionen in die Hebebühne.

Das erfindungsgemäße Verfahren zur Prüfung eines Kraftfahrzeuges mit einem erfindungsgemäßen Kraftfahrzeugprüfsystem kann die Schritte aufweisen, das Kraftfahrzeug mittels der ersten Hebevorrichtung zumindest soweit von einer Fahrschiene, einem Werkstattboden oder einem Grubenboden anzuheben, dass die Räder des Kraftfahrzeuges zumindest teilweise entlastet sein können. Ferner kann ein weiterer Schritt umfassen, die vertikale und/oder horizontale Position der zumindest einen antreibbaren Rolle zumindest einer Rollenprüfeinrichtung derart mittels Verfahren der Rolle zu verändern, dass die Rolle in Kontakt mit einer Lauffläche des Kraftfahrzeugrades kommen kann. Ferner kann ein weiterer Schritt umfassen, eine Prüfung des Kraftfahrzeuges, insbesondere eine Sichtprüfung und/oder eine Prüfung der Fahrprüfassistenten des Kraftfahrzeuges, durchzuführen, wobei zumindest eine Rolle in Kontakt mit der Lauffläche zumindest eines Kraftfahrzeugrades stehen kann.

Somit können eine Sichtprüfung und eine Prüfung der Fahrprüfassistenten eines Kraftfahrzeuges zeiteffizient miteinander kombiniert und ggf. sogar gleichzeitig durchgeführt werden. Das Fahrzeug wird angehoben und der Prüfstand wird dabei so weit entlastet, dass mit wenig komplexen, kompakten und kostengünstigen Motoren ein Kraftfahrzeugs-Funktionstest durchgeführt werden kann. Ferner kann das Kraftfahrzeug auf der Hebevorrichtung gelenkt werden, z.B. von einem Bediener oder einem Fahrroboter. Vorteilhaft ist ferner, dass das Fahrzeug nicht zusätzlich gefesselt bzw. gesichert werden muss, da das Eigengewicht des Kraftfahrzeuges z.B. auf dem Radfreiheber lastet. Es kann gegen den Antrieb der Rollen abgebremst oder beschleunigt werden.

Ferner kann das Verfahren den Schritt umfassen, dass ein Abstand zwischen den zumindest zwei Rollenprüfeinrichtungen (z.B. auf der zumindest einen Fahrschiene) mittels Verschieben zumindest einer Rollenprüfeinrichtung auf einen fahrzeugspezifischen Radstand flexibel anpasst wird.

Ein weiterer Schritt kann ferner sein, ein zu prüfendes Kraftfahrzeug auf die zumindest eine Fahrschiene der Hebebühne derart aufzufahren, dass das Hinterrad oder die Hinterräder auf den Rollen der Rollenprüfeinrichtung, die dem Hinterrad des zu prüfenden Kraftfahrzeuges zuordenbar sein kann, aufstehen können und die antreibbare Rolle der Rollenprüfeinrichtung, die einem Vorderrad des zu prüfenden Kraftfahrzeuges zuordenbar sein kann, zwischen den Vorder- und Hinterrädern und im Wesentlichen unmittelbar hinter dem Vorderrad oder den Vorderrädern angeordnet sein kann. Ferner kann ein Schritt sein, dass das Kraftfahrzeug mittels des Radfreihebers derart angehoben werden kann, dass die Räder des Kraftfahrzeuges keinen Kontakt oder eine kleinere Kontaktfläche mit einer Oberfläche der Fahrschiene bzw. des Werkstatt-/Grubenbodens aufweisen.

Ein weiterer Schritt kann sein, dass die erste Rollenprüfeinrichtung, die dem Vorderrad und/oder dem Hinterrad zugeordnet sein kann, ausgeschwenkt werden kann und der Abstand zwischen der antreibbaren Rolle und dem Drehlager derart verändert werden kann, dass eine Rollenoberfläche in Kontakt mit einer Lauffläche des Reifens stehen kann. In einem weiteren Schritt kann die zweite Rollenprüfeinrichtung, die dem zumindest einen Hinterrad zugeordnet sein kann, derart vertikal verfahren werden, dass die Rollen der Rollenprüfeinrichtung mit einer Lauffläche des Hinterrades in Kontakt stehen. Sollten jeweils nur erste Rollenprüfeinrichtungen vorgesehen sein, so könnte in dem oben genannten weiteren Schritt die Rolle ausgeschwenkt werden, um mit dem Hinterrad in Kontakt gebracht zu werden.

Ein weiterer Schritt kann das Antreiben des zumindest einen Vorderrades und/oder des zumindest einen Hinterrades mittels der antreibbaren Rollen sein. Alternativ oder zusätzlich, dies kann abhängig vom Prüfprogramm sein, können auch die Kraftfahrzeugräder gegen die Rollen angetrieben werden.

Die Funktionsprüfung, insbesondere die Prüfung der Fahrprüfassistenten des Kraftfahrzeuges, kann zumindest eine der folgenden Prüfungen umfassen: eine Prüfung des Kurvenlichtes, eine Bremsenprüfung, insbesondere des ABS, eine Prüfung einer elektronischen Schleuderkontrolle, eine Prüfung einer Antriebsschlupfregelung und/oder eine Prüfung von indirekten Reifendruckkontrollsystemen. Das Fahrzeug kann während der Prüfung bis zu einer vorbestimmten Geschwindigkeit beschleunigt werden und/oder gegen den Antrieb abgebremst oder beschleunigt werden. Aufgrund der elastisch nachgebend gelagerten Rollen der ersten Rollenprüfeinrichtung können sogar Prüfprogramme gefahren werden, die Lenkbewegungen umfassen.

Nach erfolgter Prüfung kann der Radfreiheber bzw. die erste Hebevorrichtung eingefahren werden und damit das Kraftfahrzeug auf der Fahrschiene, dem Werkstatt- oder Grubenboden abgestellt werden.

Zusammenfassend ermöglicht die Erfindung somit, dass das Kraftfahrzeug mittels einer Hebevorrichtung angehoben werden kann, eine Sichtprüfung durchgeführt werden kann und im angehobenen Zustand ferner alle sicherheitsrelevanten Steuergeräte des Kraftfahrzeuges, beispielsweise das Kurvenlicht, ABS, ESC, ASR, und indirekte Reifendruckkontrollsysteme (Drehzahldifferenz), aktiv und innerhalb kurzer Zeit mit reduziertem Aufwand untersucht werden können.

Die Erfindung wird im Folgenden exemplarisch mit Bezug auf die beigefügten, schematischen Zeichnungen beschrieben. Es zeigen
Fig. 1 das erfindungsgemäße Kraftfahrzeugprüfsystem mit ausgefahrenen Rollenprüfeinrichtungen,
Fig. 2 das erfindungsgemäße Kraftfahrzeugprüfsystem mit eingefahrenen Rollenprüfeinrichtungen,
Figuren 3-5 eine erste Rollenprüfeinrichtung,
Fig. 6 das Ausschwenken und das mit einem Rad In-Kontakt-bringen der ersten Rollenprüfeinrichtung,
Figuren 7 und 8 eine zweite Rollenprüfeinrichtung,
Fig. 9 ein In-Kontakt-bringen der zweiten Rollenprüfeinrichtung mit einem Rad,
Fig. 10 das erfindungsgemäße Kraftfahrzeugprüfsystem mit ausgefahrenen Rollenprüfeinrichtungen und
Fig. 11 ein In-Kontakt-bringen der dritten Rollenprüfeinrichtung mit einem Rad.

Im Folgenden werden verschiedene Beispiele der vorliegenden Erfindung detailliert unter Bezugnahme auf die Figuren beschrieben. Gleiche bzw. ähnliche Elemente in den Figuren werden hierbei mit gleichen Bezugszeichen bezeichnet. Die vorliegende Erfindung ist jedoch nicht auf die beschriebenen Merkmale begrenzt, sondern umfasst weiterhin Modifikationen von Merkmalen der beschriebenen Beispiele und Kombination von Merkmalen verschiedener Beispiele im Rahmen des Schutzumfangs der unabhängigen Ansprüche.

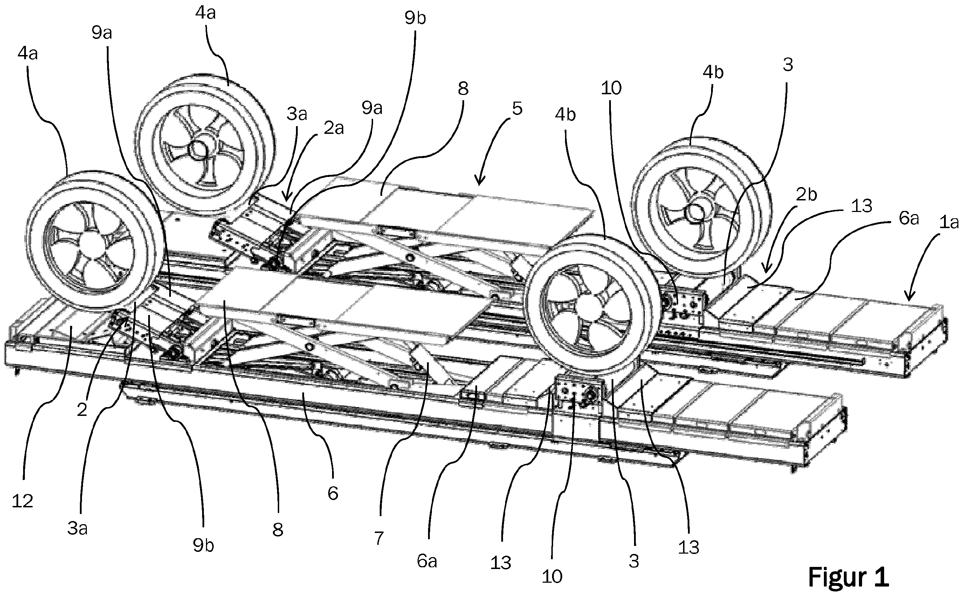

Figur 1 zeigt das erfindungsgemäße Kraftfahrzeugprüfsystem (FAPS) mit einer Scherenhebebühne als erste Hebeeinrichtung 1, 1a. Schematisch sind nur Räder 4 bzw. Reifen eines zu prüfenden Kraftfahrzeuges dargestellt, die oberhalb zweier Fahrschienen 6 der Scherenhebebühne angeordnet sind. Die Figur 1 zeigt ferner, dass jeweils ein Radfreiheber 8 an jeder Fahrschiene 6 angeordnet ist. Die Radfreiheber 8 sind in einer angehobenen Position dargestellt, so dass die Räder 4 des nicht gezeigten Kraftfahrzeuges von einer Oberfläche 6a der Fahrschienen 6 abgehoben sind, d.h. die Räder 4 sind entlastet. Die Radfreiheber 8 werden mittels eines Hubmittels 7, z.B. einem Hydraulikaktuator, angehoben. Weiterhin ist beispielhaft ein Achsspieltester 12 auf einer der Fahrschienen 6 dargestellt.

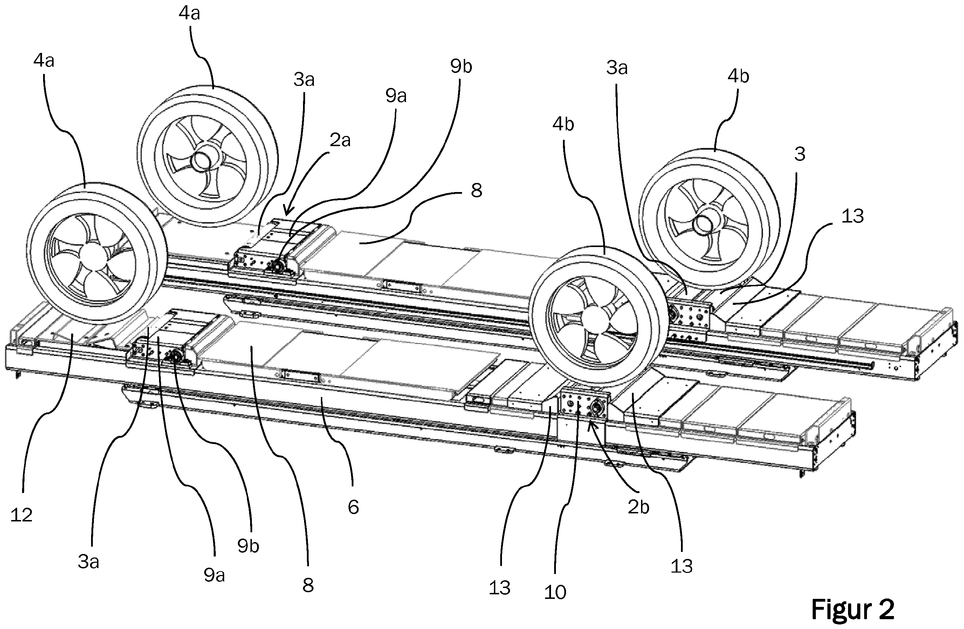

Im Vergleich zu der Darstellung in Figur 1 zeigt die Figur 2 die vier dargestellten Rollenprüfeinrichtungen 2 in einer Ausgangsposition. Insbesondere die in der Figur 2 den Vorderrädern 4a zugeordneten ersten Rollenprüfeinrichtungen 2a sind in der Ausgangsposition so weit eingeschwenkt, dass diese im Wesentlichen bündig mit der Oberfläche 6a der Fahrschienen 6 sind. Die zweiten Rollenprüfeinrichtungen 2b, die den Hinterrädern 4b zugeordnet sind, können entweder im Wesentlichen bündig mit der Oberfläche 6a der Fahrschienen 6 sein oder schräge Auffahrebenen 13 an einem Rahmen 10 aufweisen, so dass ein leichtes Überrollen mit den Rädern 4 möglich ist, wenn das Kraftfahrzeug auf die Fahrschienen 6 gefahren wird. In der in Figur 2 gezeigten Position der Radfreiheber 8 stehen die Räder 4 auf den Rollenprüfeinrichtungen 2, der Fahrschiene 6 und/oder dem Achsspieltester 12 auf und tragen das gesamte Fahrzeuggewicht, d.h. die Räder 4 sind nicht entlastet bzw. voll belastet.

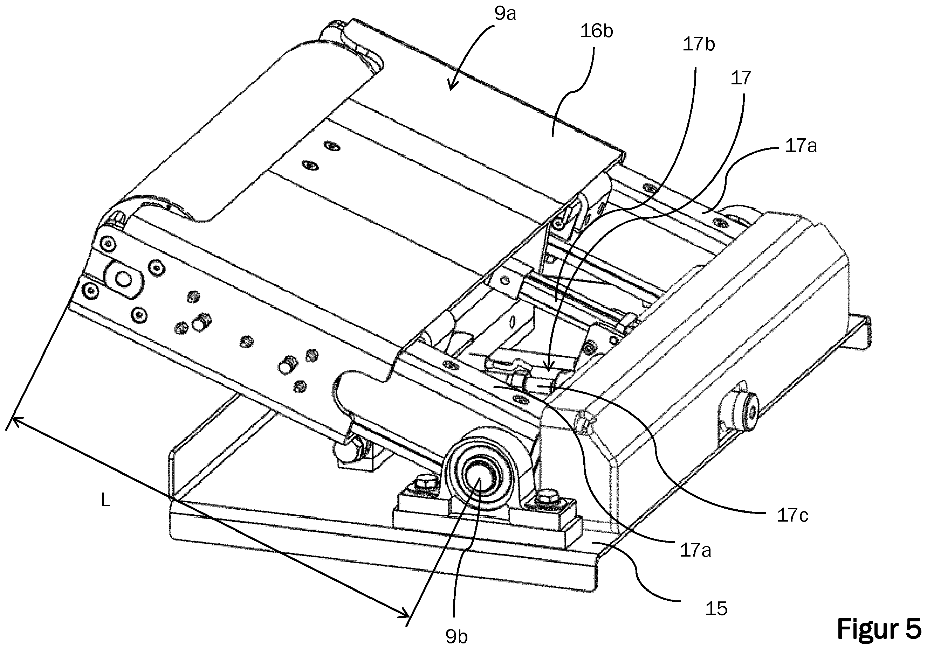

In der in Figur 1 gezeigten Position sind die Räder 4 zumindest teilweise entlastet und die Rollen 3, 3a der Rollenprüfeinrichtungen 2 stehen in Kontakt mit den Rädern 4 bzw. den Reifen. Die den Hinterrädern 4b zugeordnet gezeigten zweiten Rollenprüfeinrichtungen 2b werden dazu nach dem Anheben des Kraftfahrzeuges, d.h. dem Entlasten der Räder 4, vertikal soweit verfahren, dass die Rollen 3 mit einer vorbestimmten Druckkraft gegen die Reifen drücken. Die jeweilige Rolle 3, 3a der ersten Rollenprüfeinrichtungen 2a werden zum In-Kontakt-bringen mit den Rädern 4a aus der Ausgangsposition heraus und um ein Drehlager 9b herum verschwenkt. Zusätzlich lässt sich der Figur 1 entnehmen, dass die Rollen 3, 3a jeweils ausgefahren sind, d.h. ein Abstand L zwischen dem Drehlager 9b und den Rollen 3, 3a wurde angepasst (s. Fig. 5). Der Abstand L lässt sich mittels der teleskopierbaren Halteeinrichtung 9a, die zwischen der Rolle 3, 3a und dem Drehlager 9b angeordnet ist, einstellen. Die Rollen 3, 3a sind in Figur 1 derart ausgeschwenkt und ausgefahren, dass diese in Kontakt mit den Reifen bzw. Vorderrädern 4a stehen, und zwar mit einer vorbestimmten Druckkraft. Die Druckkraft bzw. Anpresskraft wird bevorzugt so gewählt, dass ein Drehmoment von der Rolle 3, 3a auf das Rad 4 (oder andersherum) zuverlässig und im Wesentlichen schlupffrei übertragen werden kann.

Die in Figur 1 gezeigte Positionierung der Rollenprüfeinrichtungen 2 entspricht einer Prüfposition, die erlaubt, dass diverse Funktionstests des Kraftfahrzeuges durchgeführt werden können. Die Tests umfassen insbesondere Prüfungen der Fahrprüfassistenten des Kraftfahrzeuges, wobei auch Prüfprogramme mit Lenkbewegungen möglich sind. Dazu können die Rollen 3 der ersten Rollenprüfeinrichtung 2a vorteilhaft einer Auslenkung des Rades 4 elastisch nachgeben, so dass ein permanenter Kontakt zwischen Rad 4 und Rolle 3 gewährleistet wird.

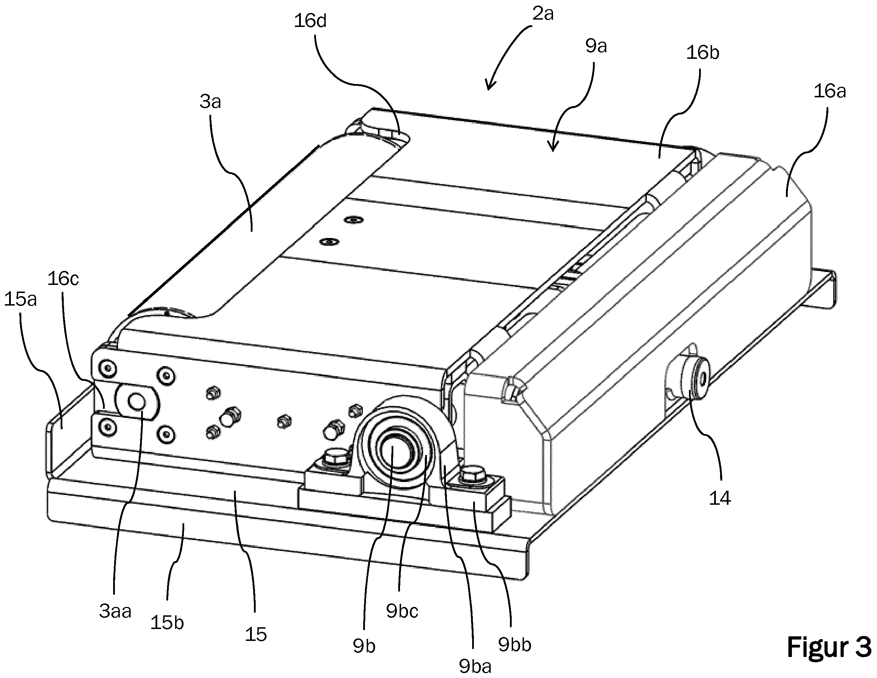

Die Figuren 3-5 zeigen Detailansichten der ersten Rollenprüfeinrichtung 2a. Figur 3 zeigt die Ausgangsposition der Rollenprüfeinrichtung 2a, in der die Halteeinrichtung 9a auf einem unteren Rahmen 15 der Rollenprüfeinrichtung 2a aufliegt. Der untere Rahmen 15 weist seitliche Rahmenelemente 15b auf, die derart geformt sind, dass Seitenkanten der Fahrschiene 6, auf der die Rollenprüfeinrichtung 2a angeordnet werden kann, umgreifbar sind. Ein vorderes Rahmenelement 15a, das von dem unteren Rahmenelement 15 nach oben absteht, schützt insbesondere die Rolle 3a vor mechanischen Beschädigungen. Das Drehlager 9b, das eine Drehachse der Halteeinrichtung 9a drehbar aufnimmt, ist mittels eines auf dem unteren Rahmen 15 befestigten Lagermittels 9ba gebildet. Das Lagermittel 9ba weist seitliche Flansche 9bb auf, an denen, wie in Fig. 3 gezeigt ist, Schraubverbindungen angebracht werden können. Eine Aufnahme 9bc des Lagermittels 9ba zum Lagern der Drehachse ist zwischen den Flanschen 9bb angeordnet. Die Drehachse der Halteeinrichtung 9a wird, wie oben beschrieben ist, beidseitig mittels zweier Lagermittel 9ba drehbar gelagert.

Die Halteeinrichtung 9a weist ein zweites Gehäuse 16b auf, dessen obere Außenfläche im Wesentlichen bündig mit einer oberen Außenfläche eines ersten Gehäuses 16a angeordnet ist. Das erste Gehäuse 16a schützt insbesondere die in Figur 5 gezeigte Schwenkeinrichtung 17 vor einer Beschädigung, beispielsweise beim Auffahren bzw. Überfahren des Kraftfahrzeuges. Das erste Gehäuse 16a weist zum Zwecke des leichteren Überfahrens eine schräg angestellte Außenfläche auf. Im Bereich einer Seitenfläche des ersten Gehäuses 16a ist durch eine Aussparung hindurch ein Anschluss 14 angeordnet. Der Anschluss 14 wird zum Bereitstellen eines Druckmediums, z.B. von Hydraulikflüssigkeit oder von Druckluft, für die Schwenkeinrichtung 17 verwendet.

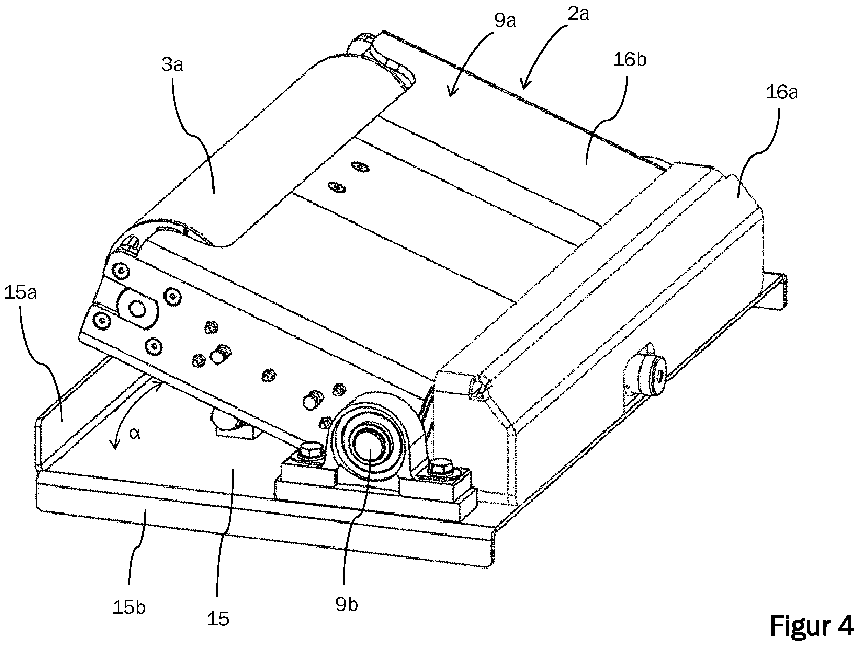

Insbesondere die Figuren 4 und 5 zeigen die Ausgestaltung der Halteeinrichtung 9a im weiteren Detail. In Figur 4 ist die Halteeinrichtung 9a, die an einem vorderen Ende die antreibbare Rolle 3a hält, um einen Winkel α aus der Ausgangsposition heraus verschwenkt gezeigt. In Figur 5 ist zusätzlich zu der verschwenkten Position der Halteeinrichtung 9a gezeigt, dass der Abstand L gegenüber der Darstellung/Position in Figur 4 vergrößert wurde. Der Abstand L kann mittels der teleskopierbaren Halteeinrichtung 9a eingestellt werden. In der ausgefahrenen Position gemäß Figur 5 wird auch der innere Aufbau der Halteeinrichtung 9a verdeutlicht. Das zweite Gehäuse 16b ist an zwei äußeren Trägerelementen 17a verschiebbar bzw. verfahrbar angeordnet. Das zweite Gehäuse 16b umgreift die beiden äußeren Trägerelemente 17a dazu zumindest teilweise und ist gleitend mit den äußeren Trägerelementen 17a verbunden. Beispielsweise weisen die Trägerelemente 17a eine Doppel-T-Form auf, so dass ein Gleitelement zwischen dem zweiten Gehäuse 16b und einem Steg der Doppel-T-Form angeordnet werden kann. Zwischen den beiden äußeren Trägerelementen 17a sind ein mittleres Trägerelement 17b und ein Hubelement 17c angeordnet. Das Hubelement 17c bringt mittels des Druckmediums, das über den Anschluss 14 bereitgestellt wird, eine Kraft auf, die es erlaubt, das Verschwenken und/oder das Teleskopieren der Halteeinrichtung 9a auszuführen.

Weiterhin zeigen die Figuren 3-5, dass in einem Seitenabschnitt des zweiten Gehäuses 16b im Endbereich, der die Rolle 3a hält, eine erste, im Wesentlichen rechteckige Aussparung 16c vorgesehen ist. Diese erste Aussparrung 16c dient der Aufnahme einer Rollenachse 3aa der antreibbaren Rolle 3a. Eine weitere längliche, im Wesentlichen rechteckige zweite Aussparung 16d ist im Endbereich der Halteeinrichtung 9a in einer axialen Richtung der Rolle 3a angeordnet. Diese zweite Aussparung 16d ermöglicht, dass die Rolle 3a passgenau in dem zweiten Gehäuse 16b angeordnet werden kann, ohne dass die Rolle 3a weit aus dem zweiten Gehäuse 16b herausragt. Somit wird die Rolle 3a bestmöglich vor Beschädigungen durch mechanische Belastungen geschützt.

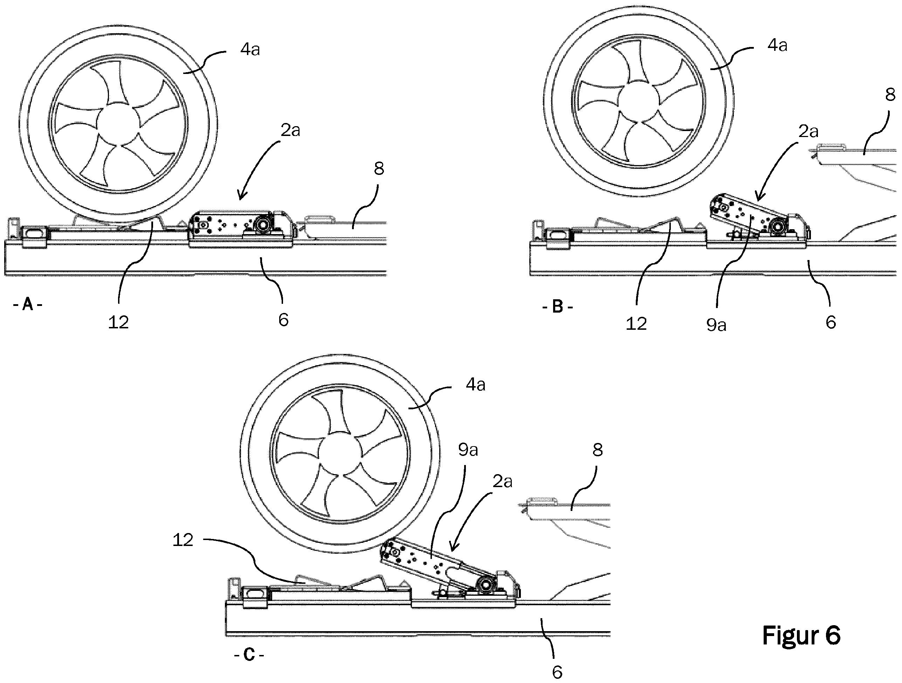

Figur 6 zeigt in den Einzeldarstellungen A-C Teilaspekte des Vorgangs des In-Kontakt-Bringens der Rolle 3a der ersten Rollenprüfeinrichtung 2a mit dem Vorderrad 4a. Das Vorderrad 4a steht vor dem Anheben des Kraftfahrzeuges mittels des Radfreihebers 8 auf der Fahrschiene 6 bzw. auf einem Achsspieltester 12 auf. Die Rollenprüfeinrichtung 2a ist in der Ausgansposition (Darstellung A). In Darstellung B ist der Zeitpunkt des Verfahrensablaufes gezeigt, zu dem das Rad 4 vollständig entlastet ist, weil das Kraftfahrzeug mittels des Radfreihebers 8 angehoben wurde. Ferner ist die Halteeinrichtung 9a der Rollenprüfeinrichtung 2a aus der Ausgangsposition ausgeschwenkt. Darstellung C zeigt den Zeitpunkt, wenn die Rolle 3a der Rollenprüfeinrichtung 2a wie gewünscht durch ein Ausfahren/Teleskopieren der Halteeinrichtung 9a an die Reifenaußenfläche herangefahren ist. Diese Anordnung der Rolle 3a zum Rad 4 erlaubt danach das Durchführen von verschiedenen Funktionsprüfungen, bei denen das Rad 4 gegen die Rolle 3a beschleunigt oder abgebremst werden kann, bei denen das Rad 4 mittels der antreibbaren Rolle 3a angetrieben werden kann und/oder dgl. Es ist ein technischer Vorteil der Erfindung, dass sogar größere Lenkbewegungen mit einem Lenkwinkel von z.B. mehr als 5° während der Prüfung ausgeführt werden können. Wird die Position des Rades 4 verändert, z.B. durch Lenkbewegungen, kann die Rolle 3a im Hinblick auf ihre Position elastisch nachgeben.

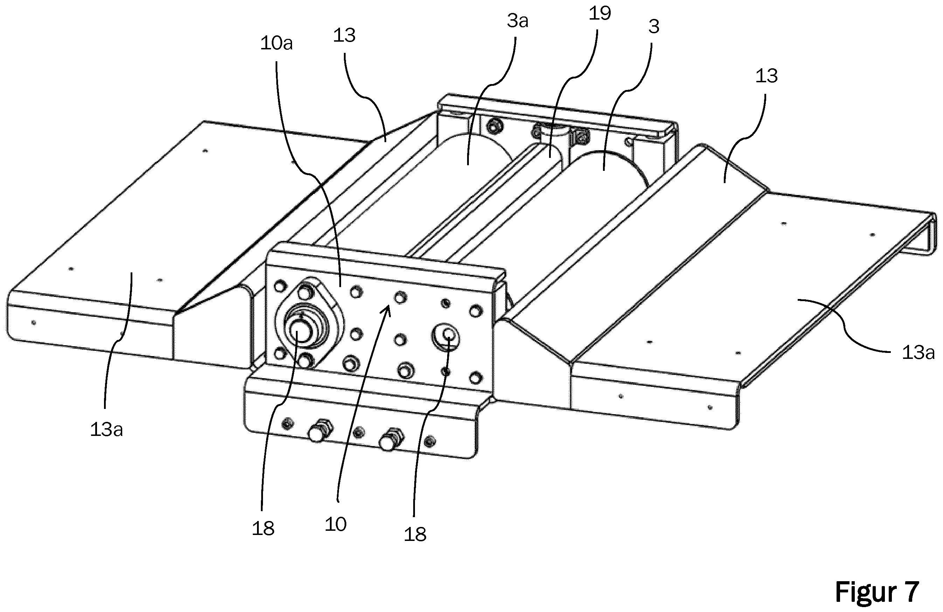

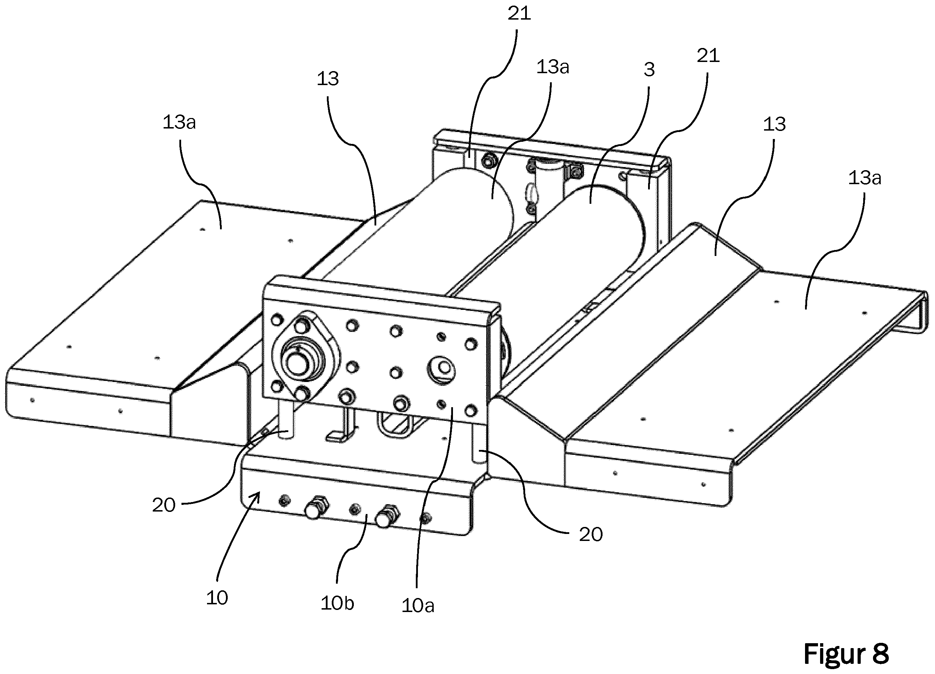

Die Figuren 7 und 8 zeigen desweiteren eine zweite Rollenprüfeinrichtung 2b. Das Kraftfahrzeugprüfsystem kann diese zweite Rollenprüfeinrichtung 2b in Kombination mit der ersten Rollenprüfeinrichtung 2a aufweisen. Es können erfindungsgemäß auch alternativ ausgestaltete Kraftfahrzeugprüfsysteme vorgesehen sein, die nur erste oder zweite Rollenprüfeinrichtungen 2 aufweisen. Die zweite Rollenprüfeinrichtung 2b wird mechanisch sehr robust und langlebig von einem Rahmen 10 eingefasst, der in einer mittigen Position zwei Rollen 3 hält. Rechts und links der Rollen 3 sind weitere Rahmenelemente angeordnet, insbesondere sind jeweils eine schräge Auffahrebene 13, die das Überfahren mit dem Rad 4 erleichtert, und jeweils eine ebene Auffahrebene 13a an beiden Seiten der Rollen 3 angeordnet. Die ebene Auffahrebene 13a kann mittels der seitlich nach unter herausstehenden Seitenelemente die Kanten einer Fahrschiene 6 zumindest teilweise umgreifen, so dass ein fester, passgenauer Sitz auf der Fahrschiene 6 ermöglicht wird.

Aus Figur 7 wird eine Ausgansposition bzw. eingefahrene Position der Rollen 3 bzw. der zweiten Rollenprüfeinrichtung 2b ersichtlich. Ein oberer, verfahrbarer Teil 10a des Rahmens 10 liegt auf einem unteren Rahmenteil 10b auf. Der obere Teil 10a des Rahmens 10 lagert die Rollen 3 mittels Rollenlagern 18 in seitlichen Abschnitten. Zumindest eine der beiden Rollen 3 ist eine antreibbare Rolle 3a. Die antreibbare Rolle 3a wird erfindungsgemäß bevorzugt von einem nicht gezeigten Innenmotor angetrieben. Zwischen den Rollen 3 ist eine Querverstrebung 19, die die mechanische Steifigkeit der zweiten Rollenprüfeinrichtung 2b erhöht, angeordnet.

Weiterhin zeigt Figur 8 eine vertikal ausgefahrene Position der zweiten Rollenprüfeinrichtung 2b. In dieser Position ist der verfahrbare Rahmenteil 10a von dem unteren Rahmenteil 10b vertikal abgehoben. Das Verfahren kann beispielsweise mittels z.B. eines Hydraulikantriebes oder eines Elektromotors an Führungen 20 entlang erfolgen. Die Führungen 20 können die Verfahrbewegung des oberen Rahmenteils 10a vorgeben. Die Führungen 20 können innerhalb von Führungsaufnahmen 21, die am verfahrbaren Rahmenteil 10a angeordnet sind, gleitend gelagert sein. Die Figur 8 zeigt ferner, dass die Rollen 3 im angehobenen Zustand über eine Außenkante der Querversteifung 19 herausstehen, d.h. die Querversteifung 19 wird nicht mit den Rollen 3 vertikal verfahren.

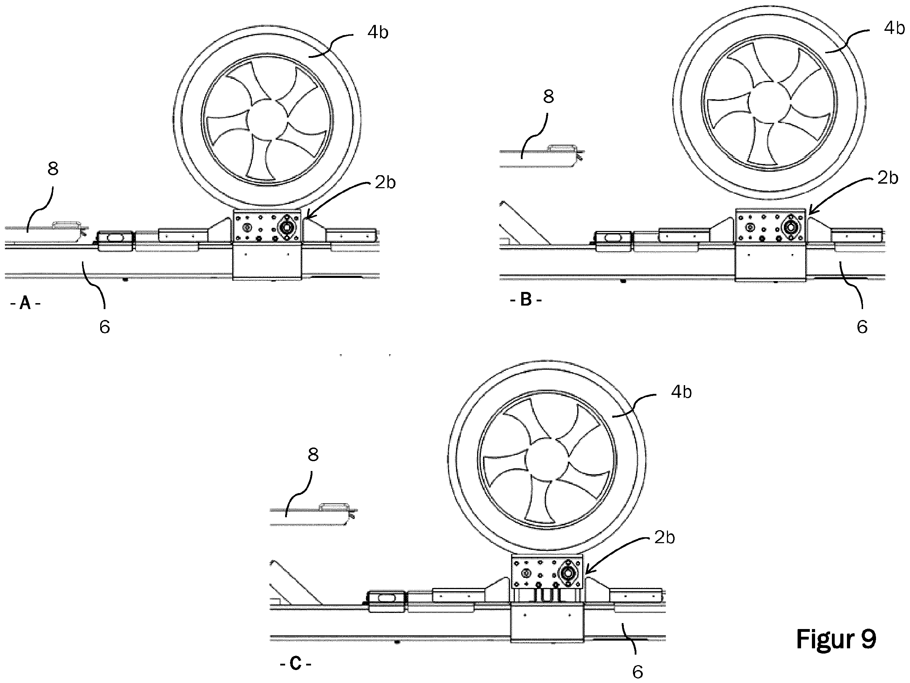

Figur 9 zeigt das In-Kontakt-bringen der zweiten Rollenprüfeinrichtung 2b mit einem Rad 4, beispielhaft ist hier ein Hinterrad 4b gezeigt. Nachdem das nicht dargestellt Kraftfahrzeug auf der Fahrschiene 6 aufgestellt wurde, steht das Rad 4b auf den Rollen 3 der zweiten Rollenprüfeinrichtung 2b auf. Der Radfreiheber 8 ist nicht angehoben (Darstellung A). Darstellung B zeigt den Zeitpunkt, wenn der Radfreiheber 8 in die gewünschte Position angehoben worden ist, so dass das Kraftfahrzeug von der Fahrschiene 6 abgehoben ist und das Rad 4b entlastet ist. Die zweite Rollenprüfeinrichtung 2b ist zu diesem Zeitpunkt noch nicht aus der Ausgangsposition verfahren worden. Zu diesem Zeitpunkt oder bevorzugt bevor das Kraftfahrzeug auf die Fahrschiene aufgefahren wird, kann die zweite Rollenprüfeinrichtung 2b entlang einer seitlichen Führungsnut der Fahrschiene 6 verfahren werden, z.B. um die Position der Rollen 3 auf den Radstand des Fahrzeuges anzupassen. Dies kann manuell oder automatisch erfolgen. Die Darstellung C der Figur 9 zeigt dann die ausgefahrene Position der zweiten Rollenprüfeinrichtung 2b, bei der ein Kontakt zwischen dem Rad 4b und den Rollen 3 hergestellt ist. Diese Position gemäß Darstellung C erlaubt, Funktionsprüfungen des Kraftfahrzeuges durchzuführen wie sie oben bereits beschrieben wurden.

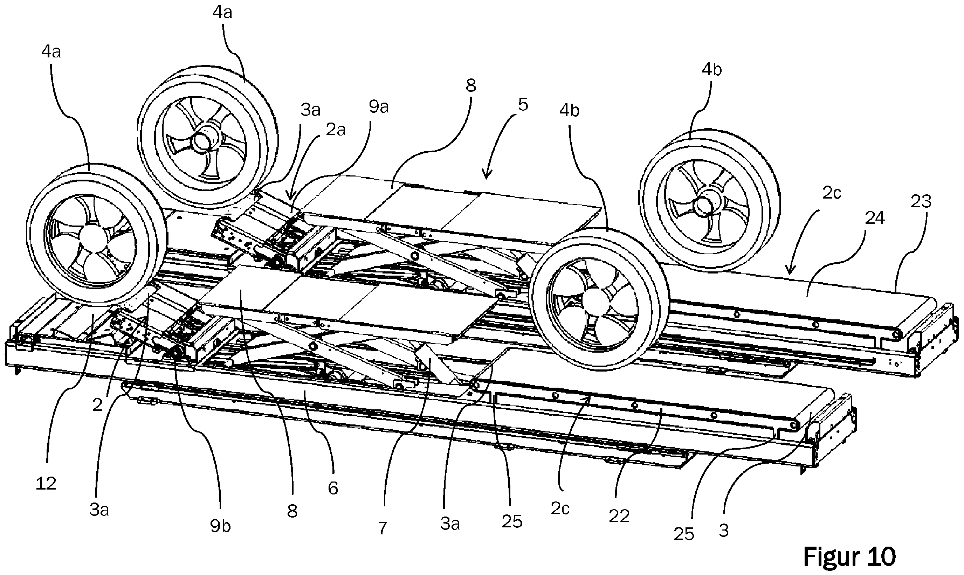

Weiterhin kann auch eine dritte Rollenprüfeinrichtung 2c vorgesehen sein, die ein Laufband 23 aufweist, das horizontal angeordnet und antreibbar ist. Dies zeigt die Figur 10. Das Rad 4, bevorzugt ein Hinterrad 4b, kann auf einem Obertrum 24 des Laufbandes 23, das um zwei Rollen 3, 3a herumgeschlungen sein kann, aufstehen und von dem Laufband 23 angetrieben bzw. abgebremst werden. Ein Bandeinheitsrahmen 22 kann die beiden Rollen 3 halten. Das Laufband 23 kann hinsichtlich seiner vertikalen Position positioniert werden, z.B. durch ein Verfahren des Bandeinheitsrahmens 22. Das vertikale Positionieren erlaubt ähnlich zu der oben beschriebenen Positionierung der zweiten Rollenprüfeinrichtung 2b, dass das Laufband 23 bzw. dessen Obertrum 24 in Kontakt mit dem Rad 4 bringbar ist. Die dritte Rollenprüfeinrichtung 2c ist somit eine weitere Bauform der Rollenprüfeinrichtungen 2. Das Kraftfahrzeugprüfsystem kann z.B. für die Prüfung eines vierrädrigen Kraftfahrzeuges zwei erste und zwei dritte Rollenprüfeinrichtungen 2 aufweisen. Die dritte Rollenprüfeinrichtung 2c bringt insbesondere den Vorteil mit sich, dass eine Positionierung auf den Radstand eines Kraftfahrzeuges entfallen kann, so dass der Prüfvorgang noch zeiteffizienter durchführbar ist.

Die Figur 10 zeigt das Kraftfahrzeugprüfsystem mit zwei ersten Rollenprüfeinrichtungen 2a, die den Vorderrädern 4a zugeordnet sind, und zwei dritten Rollenprüfeinrichtungen 2c, die den Hinterrädern 4b zugeordnet sind. Die Rollenprüfeinrichtungen 2 sind in der Figur 10 in Kontakt stehend mit den Rädern 4 des mittels des Radfreihebers 8 angehobenen Kraftfahrzeuges gezeigt. Die dritten Rollenprüfeinrichtungen 2c sind mittels der Hebemittel 25 vertikal soweit von der Fahrschienenoberfläche 6a abgehoben, dass ein Kontakt zwischen Rad 4 bzw. Reifenoberfläche und Obertrum 24 gegeben ist. Wie die Figur 10 weiterhin zeigt weisen die dritten Rollenprüfeinrichtungen 2c eine Länge auf, die im Wesentlichen der Länge eines Abschnittes der Fahrschienen 6 entspricht, der hinsichtlich einer Auffahrrichtung der Fahrschienen 6 hinter den Radfreihebern 8 angeordnet ist. Dies ermöglicht besonders vorteilhaft, dass die dritten Rollenprüfeinrichtungen 2c nicht im Hinblick auf einen Radstand des Kraftfahrzeuges verschoben bzw. positioniert werden müssen. Ferner ist anzumerken, dass, wenn die dritten Rollenprüfeinrichtungen 2c die Vorderräder aufnehmen sollen, eine zu der in Figur 10 gezeigten Anordnung analoge Anordnung der dritten Rollenprüfeinrichtungen 2c im Bereich der Vorderachse eines Kraftfahrzeuges möglich ist.

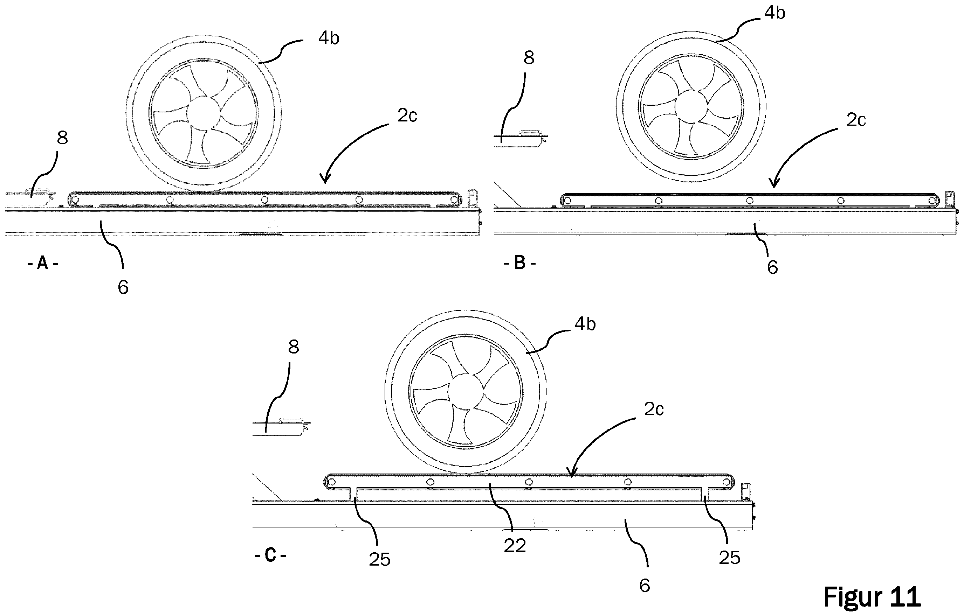

Die Figuren 11a-11c zeigen ferner den Vorgang, bei dem das Laufband 23 mit den entlasteten Rädern 4 in Kontakt gebracht wird. Figur 11a zeigt den Zeitpunkt, wenn das nicht gezeigte Kraftfahrzeug auf der Fahrschiene 6, von der nur ein Teilabschnitt gezeigt ist, aufgestellt worden ist. Das gezeigte Hinterrad 4b steht auf dem Obertrum 24 der dritten Rollenprüfeinrichtung 2c auf. Danach werden die Räder 4 des Kraftfahrzeuges entlastet. Dies wird dadurch erreicht, dass der Radfreiheber 8, der abgeschnitten dargestellt ist, ausgefahren wird. Figur 11b zeigt den Zeitpunkt, wenn der Radfreiheber 8 auf die gewünschte Position angehoben ist. Danach wird das Laufband 23 vertikal nachverfahren, um die Reifenoberfläche und den Obertrum 24 miteinander in Kontakt zu bringen, so dass ein Drehmoment übertragen werden kann. Das Ausfahren der dritten Rollenprüfeinrichtung 2c erfolgt mittels der gezeigten Hebemittel 25, die z.B. hydraulische oder pneumatische Aktuatoren sein können. Die in Figur 11c gezeigte Positionierung erlaubt das Durchführen verschiedener Kraftfahrzeug-Prüfprogramme, wozu zumindest eine Rolle 3 der Rollen 3 der dritten Rollenprüfeinrichtung 2c antreibbar sein kann, beispielsweise mittels eines Rolleninnenmotors, der sehr kompakt ist.

Zusammenfassend ist festzuhalten, dass das erfindungsgemäße Prüfsystem und das dazugehörige Verfahren die technischen Vorteile mit sich bringt, dass eine Sichtprüfung und eine oder mehrere Funktionsprüfung(en) eines Kraftfahrzeuges mit möglichst wenig Arbeitsschritten und in kurzer Zeit durchgeführt werden können. Zudem sind keine gesonderten Prüfstände erforderlich. Weiterhin erlaubt insbesondere die erfindungsgemäße erste Rollenprüfeinrichtung 2a, dass die Positionierung zum Rad 4 weniger komplex erfolgen kann, z.B. mittels eines einfachen Verschiebens und Aufklappens der ersten Rollenprüfeinrichtung 2a. Weiterhin ist es ein technischer Vorteil, dass gegen die aufgeklappte Rolle 3a der ersten Rollenprüfeinrichtung 2a auch gelenkt werden kann, indem die Rolle 3a im Hinblick auf ihre Position elastisch nachgeben kann. Somit bleibt selbst bei einer größeren Lenkbewegung, z.B. von größer 5°, der vorbestimmte Kontakt zwischen Rolle 3a und Rad 4 erhalten. Prüfprogramme mit Lenkbewegungen können somit mit dem erfindungsgemäßen Prüfsystem ebenfalls ausgeführt werden.
1 erste Hebevorrichtung
1a Hebeeinrichtung
2 Rollenprüfeinrichtung
2a erste Rollenprüfeinrichtung
2b zweite Rollenprüfeinrichtung
2c dritte Rollenprüfeinrichtung
3 (verfahrbare bzw. positionierbare) Rolle
3a (verfahrbare bzw. positionierbare) antreibbare Rolle
3aa Rollenachse
4 Rad eines Kraftfahrzeuges
4a Vorderrad
4b Hinterrad
5 zweite Hebevorrichtung
6 Fahrschiene
6a Oberfläche der Fahrschiene
7 Hubmittel
8 Radfreiheber
9 Positioniervorrichtung
9a Halteeinrichtung
9b Drehlager
9bb Flansch
9bc Aufnahme
9ba Lagermittel
10 Rahmen
10a verfahrbares Rahmenteil
10b Basisrahmenteil
11 Trommelmotor
12 Achsspieltester
13 schräge Auffahrebene des Rahmens 10
13a ebene Auffahrebene des Rahmens 10
14 Anschluss Hydraulik
15 unterer Rahmen
15a vorderes Rahmenelement
15b seitliche Rahmenelemente
16a erstes Gehäuse
16b zweites Gehäuse
16c erste Aussparung Gehäuse 16b
16d zweite Aussparung Gehäuse 16b
17 Schwenkeinrichtung
17a seitliches Trägerelement
17b mittleres Trägerelement
17c Hubelement
18 Rollenlager
19 Querversteifung
20 Führung
21 Führungsaufnahme
22 Bandeinheitsrahmen
23 Laufband
24 Obertrum des Laufbandes
25 Hebemittel des Bandeinheitsrahmens
L Abstand

## Patentansprüche

1. Kraftfahrzeugprüfsystem mit
- mit einer ersten Hebevorrichtung (1) zum Anheben eines zu prüfenden
Kraftfahrzeuges, und
- einer Rollenprüfeinrichtung (2), die zumindest eine positionierbare Rolle (3) aufweist, wobei
- das zu prüfende Kraftfahrzeug mittels der ersten Hebevorrichtung (1) zumindest soweit anhebbar ist, dass Räder (4) des Kraftfahrzeuges zumindest teilweise entlastet sind, wobei
- die zumindest eine Rolle (3) derart positionierbar ist, dass sie in Kontakt mit zumindest einem der entlasteten Räder (4) des Kraftfahrzeuges bringbar ist,
**gekennzeichnet dadurch, dass** zumindest eine erste Rollenprüfeinrichtung (2a) zumindest eine antreibbare Rolle (3a) aufweist und eine Positioniervorrichtung (9), die dazu geeignet ist, eine Position der antreibbaren Rolle (3a) zu verändern, wobei die antreibbare Rolle (3a) der ersten Rollenprüfeinrichtung (2a) von einer Halteeinrichtung (9a) gehalten wird, die an einem Ende mittels eines Drehlagers (9b) gelagert ist, wobei die antreibbare Rolle (3a) an dem Drehlager (9b) entgegengesetzten Ende angeordnet ist, und wobei ein Abstand (L) zwischen dem Drehlager (9b) und der antreibbaren Rolle (3a) veränderbar ist und die Halteeinrichtung (9a) verschwenkbar um das Drehlager (9b) herum angeordnet ist.

2. Kraftfahrzeugprüfsystem nach Patentanspruch 1, **gekennzeichnet dadurch, dass** die erste Hebevorrichtung (1)
- zumindest eine Hebeeinrichtung (1a) aufweist, die an einem Werkstattboden oder in einer Werkstattgrube angeordnet ist und die dazu eingerichtet ist, ein Kraftfahrzeug derart von dem Wertstattboden oder einem Grubenboden anzuheben, dass die Räder (4) zumindest teilweise von einem Eigengewicht des Kraftfahrzeuges entlastet sind, wobei
- die Hebeeinrichtung (1a) eine Scherenhebebühne, Hubstempel-Bühne und/oder Säulenhebebühne umfasst.

3. Kraftfahrzeugprüfsystem nach zumindest einem der voranstehenden Patentansprüche, **gekennzeichnet dadurch, dass** die erste Hebevorrichtung (1) ein Radfreiheber ist und auf einer zweiten Hebevorrichtung (5) angeordnet ist, wobei die zweite Hebevorrichtung (5)
- zumindest eine Fahrschiene (6) zum Aufnehmen des zu prüfenden Kraftfahrzeugs, und
- zumindest ein Hubmittel (7) zum Anheben der Fahrschiene aufweist.

4. Kraftfahrzeugprüfsystem nach zumindest einem der voranstehenden Patentansprüche, **gekennzeichnet dadurch, dass** zumindest zwei Rollenprüfeinrichtungen (2) vorgesehen sind, wobei zumindest eine Rollenprüfeinrichtung (2) einem Vorderrad (4a) und zumindest eine Rollenprüfeinrichtung (2) einem Hinterrad (4b) des Kraftfahrzeuges zuordenbar ist.

5. Kraftfahrzeugprüfsystem nach zumindest einem der voranstehenden Patentansprüche, **gekennzeichnet dadurch, dass** zumindest eine der Rollenprüfeinrichtungen (2) an der Fahrschiene (6) entlang einer Längsrichtung verschiebbar gelagert ist und/oder
zumindest eine der Rollenprüfeinrichtungen (2) auf einem Werkstattboden, insbesondere in Längsrichtung eines zu prüfenden Kraftfahrzeuges, verschiebbar gelagert ist.

6. Kraftfahrzeugprüfsystem nach zumindest einem der vorangegangenen Patentansprüche, **gekennzeichnet dadurch, dass** die Halteeinrichtung (9a) teleskopierbar ausgeführt ist und ein Teleskopausschub elastisch nachgebend ist.

7. Kraftfahrzeugprüfsystem nach zumindest einem der voranstehenden Patentansprüche, **gekennzeichnet dadurch, dass** eine zweite Rollenprüfeinrichtung (2b) zumindest zwei in einem Rahmen (1O) achsparallel zueinander angeordnete Rollen (3) aufweist, von denen zumindest eine Rolle antreibbar ist.

8. Kraftfahrzeugprüfsystem nach zumindest einem der voranstehenden Patentansprüche, **gekennzeichnet dadurch, dass** der Rahmen (10) der zweiten Rollenprüfeinrichtung (2b) in vertikaler Richtung verfahrbar gelagert ist, so dass ein Abstand der Rollen (3) zu einer Oberfläche (6a) der Fahrschiene (6) oder einem Werkstatt- bzw. Grubenboden einstellbar ist.

9. Kraftfahrzeugprüfsystem nach zumindest einem der voranstehenden Patentansprüche, **gekennzeichnet dadurch, dass** die antreibbaren Rollen (3a) mittels eines Trommelmotors (11), der innerhalb der Rollen (3a) angeordnet ist, antreibbar sind, und
die Halteeinrichtung (9a) und der Rahmen (10) mittels Elektromotoren, bevorzugt Linearmotoren, in ihrer Position veränderbar sind.

10. Kraftfahrzeugprüfsystem nach zumindest einem der voranstehenden Patentansprüche, **gekennzeichnet dadurch, dass** eine dritte Rollenprüfeinrichtung (2c) vorgesehen ist, die ein horizontal angeordnetes Laufband (23) aufweist, wobei eine vertikale Position des horizontalen Laufbandes (23) einstellbar ist.

11. Verfahren zur Prüfung eines Kraftfahrzeuges mit einem Kraftfahrzeugprüfsystem nach zumindest einem der voranstehenden Patentansprüche, wobei
- ein Schritt umfasst, das Kraftfahrzeug mittels der ersten Hebevorrichtung (1) zumindest soweit von einer Fahrschiene (6), einem Werkstattboden oder einem Grubenboden anzuheben, dass die Räder (4) des Kraftfahrzeuges zumindest teilweise entlastet sind,
- ein weiterer Schritt umfasst, die vertikale und/oder horizontale Position der zumindest einen antreibbaren Rolle (3a) zumindest einer Rollenprüfeinrichtung (2) derart mittels Verfahren der Rolle (3, 3a) zu verändern, dass die Rolle (3, 3a) in Kontakt mit einer Lauffläche des Kraftfahrzeugrades (4) kommt, und
- ein weiterer Schritt umfasst, eine Rollenprüfstandsprüfung des Kraftfahrzeuges durchzuführen, wobei zumindest eine Rolle (3, 3a) in Kontakt mit der Lauffläche zumindest eines Kraftfahrzeugrades (4) steht.

12. Verfahren zur Prüfung eines Kraftfahrzeuges gemäß Patentanspruch 11, wobei die Rollenprüfstandsprüfung zumindest eine der Prüfungen des Kurvenlichtes, der Kraftfahrzeugbremsen, insbesondere ABS, einer elektronischen Schleuderkontrolle, einer Antriebsschlupfregelung und eines indirekten Reifendruckkontrollsystems umfasst, wobei
das Fahrzeug während der Prüfung lenkbar ist und bis zu einer vorbestimmten Geschwindigkeit beschleunigt wird und/oder gegen den Antrieb abgebremst oder beschleunigt wird.

## Claims

1. A motor vehicle test system comprising
- a first lifting device (1) for lifting a motor vehicle to be tested, and
- a roller test device (2) having at least one positionable roller (3), wherein
- said motor vehicle to be tested can be lifted by means of said first lifting device (1) at least to such an extent that wheels (4) of said motor vehicle are at least partially unloaded, wherein
- at least one roller (3) is positionable such that it can be brought into contact with at least one of the unloaded wheels (4) of said motor vehicle, **characterized in that** at least one first roller test device (2a) has at least one drivable roller (3a) and a positioning device (9) configured to change a position of said drivable roller (3a), wherein
the drivable roller (3a) of said first roller test device (2a) is held by a holding device (9a) which is mounted on one end by means of a pivot bearing (9b), wherein
the drivable roller (3a) is arranged on the end opposite said pivot bearing (9b), and wherein a distance (L) between said pivot bearing (9b) and said drivable roller (3a) is variable and said holding device (9a) is arranged pivotally about said pivot bearing (9b).

2. The motor vehicle test system according to claim 1, **characterized in that** said first lifting device (1) comprises:
- at least one lifting device (1a) arranged on a workshop floor or in a workshop pit and configured to lift a motor vehicle from the workshop floor or a pit floor in such a way that said wheels (4) are at least partially relieved of a self-weight of said motor vehicle, wherein
- said lifting device (1a) comprises a scissor lift, post lift and/or column lift.

3. The motor vehicle test system according to at least one of the preceding claims, **characterized in that** said first lifting device (1) is a wheel jack and is arranged on a second lifting device (5), said second lifting device (5) comprising
- at least one running rail (6) for receiving said motor vehicle to be tested, and
- at least one lifting means (7) for lifting said running rail.

4. The motor vehicle test system according to at least one of the preceding claims, **characterized in that** at least two roller test devices (2) are provided, wherein at least one roller test device (2) can be assigned to a front wheel (4a) of said motor vehicle and at least one roller test device (2) can be assigned to a rear wheel (4b) of said motor vehicle.

5. The motor vehicle test system according to at least one of the preceding claims, **characterized in that** at least one of said roller test devices (2) is mounted slidingly along a longitudinal direction on said running rail (6) and/or at least one of said roller test devices (2) is mounted slidingly on a workshop floor, in particular in the longitudinal direction of a motor vehicle to be tested.

6. The motor vehicle test system according to at least one of the preceding claims, **characterized in that** said holding device (9a) is designed to be telescopic and a telescopic extension is resiliently yielding.

7. The motor vehicle test system according to at least one of the preceding claims, **characterized in that** a second roller test device (2b) comprises at least two rollers (3) which are arranged axially parallel to each other in a frame (10), at least one of which is drivable.

8. The motor vehicle test system according to at least one of the preceding claims, **characterized in that** said frame (10) of said second roller test device (2b) is mounted movably in the vertical direction, so that a distance of the rollers (3) to a surface (6a) of said running rail (6) or a workshop or pit floor is adjustable.

9. The motor vehicle test system according to at least one of the preceding claims, **characterized in that** said drivable rollers (3a) are drivable by means of a drum motor (11) arranged within said rollers (3a), and
the holding device (9a) and said frame (10) can be adjusted in position by means of electric motors, preferably linear motors.

10. The motor vehicle test system according to at least one of the preceding claims, **characterized in that** a third roller test device (20) is provided which has a horizontally arranged conveyor belt (23), wherein a vertical position of said horizontal conveyor belt (23) is adjustable.

11. A method of testing a motor vehicle with a motor vehicle test system according to at least one of the preceding claims, wherein
- a step comprises lifting said motor vehicle by means of said first lifting device (1) from a running rail (6), a workshop floor, or a pit floor to such an extent that said wheels (4) of said motor vehicle are at least partially unloaded,
- a further step comprises changing the vertical and/or horizontal position of said at least one drivable roller (3a) of at least one roller testing device (2) by moving said roller (3, 3a) in such a way that said roller (3, 3a) comes into contact with a tread of said motor vehicle wheel (4), and
- a further step comprises carrying out a roller test stand test of said motor vehicle, wherein at least one roller (3, 3a) is in contact with the tread of at least one motor vehicle wheel (4).

12. The method of testing a motor vehicle according to claim 11, wherein said roller test stand test includes at least one of the tests of the cornering light, the motor vehicle brakes, in particular ABS, an electronic skidding control, a traction control, and an indirect tire pressure monitoring system, wherein
the vehicle is steerable during the test and is accelerated up to a predetermined speed and/or decelerated or accelerated against said drive.

## Revendications

1. Système de contrôle de véhicule automobile, comportant
- un premier dispositif de soulèvement (21) pour soulever un véhicule automobile à contrôler, et
- un moyen de contrôle à rouleau (2) comportant au moins un rouleau positionnable (3), dans lequel
- le véhicule à contrôler peut être soulevé au moyen du premier dispositif de soulèvement (1) au moins aussi loin que les roues (4) du véhicule automobile sont au moins partiellement déchargées, et
- ledit au moins un rouleau (3) peut être positionné de manière à pouvoir être amené en contact avec l'une au moins des roues déchargées (4) du véhicule automobile,
**caractérisé en ce qu'**au moins un premier moyen de contrôle à rouleau (2a) comprend au moins un rouleau (3a) susceptible d'être entraîné, et un dispositif de positionnement (9) qui est apte à modifier une position du rouleau (3a) à entraîner, le rouleau (3a) à entraîner du premier moyen de contrôle à rouleau (2a) étant retenu par un moyen de retenue (9a) qui est monté à une extrémité à l'aide d'un palier de rotation (9b), et
le rouleau (3a) à entraîner est agencé à l'extrémité opposée au palier de rotation (9b), une distance (L) entre le palier de rotation (9b) et le rouleau (3a) à entraîner étant variable et le moyen de retenue (9a) étant agencé mobile en basculement autour du palier de rotation (9b).

2. Système de contrôle de véhicule automobile selon la revendication 1, **caractérisé en ce que** le premier dispositif de soulèvement (1)
- comprend au moins un moyen de soulèvement (1a) qui est agencé sur le sol d'un garage ou dans la fosse d'un garage et qui est conçu pour soulever un véhicule automobile depuis le sol du garage ou depuis le fond d'une fosse de telle sorte que les roues (4) sont au moins partiellement déchargées d'un poids propre du véhicule automobile, et
- le moyen de soulèvement (1a) comprend une plateforme élévatrice à ciseaux, une plateforme élévatrice à vérin de levage et/ou une plateforme élévatrice à colonne.

3. Système de contrôle de véhicule automobile selon l'une au moins des revendications précédentes, **caractérisé en ce que** le premier dispositif de soulèvement (1) est un élévateur de roue et il est agencé sur un second dispositif de soulèvement (5), le second dispositif de soulèvement (5) comprenant
- au moins un rail de roulement (6) pour recevoir le véhicule automobile à contrôler, et
- au moins un moyen de soulèvement (7) pour soulever le rail de roulement.

4. Système de contrôle de véhicule automobile selon l'une au moins des revendications précédentes, **caractérisé en ce qu'**il est prévu au moins deux moyens de contrôle à rouleau (2), au moins un moyen de contrôle à rouleau (2) pouvant être associé à une roue avant (4a) et au moins un moyen de contrôle à rouleau (2) pouvant être associé à une roue arrière (4b) du véhicule automobile.

5. Système de contrôle de véhicule automobile selon l'une au moins des revendications précédentes, **caractérisé en ce que** l'un au moins des moyens de contrôle à rouleau (2) est monté mobile en translation le long d'une direction longitudinale sur le rail de roulement (6), et/ou au moins un des moyens de contrôle à rouleau (2) est monté mobile en translation sur le sol d'un garage, en particulier en direction longitudinale d'un véhicule automobile à contrôler.

6. Système de contrôle de véhicule automobile selon l'une au moins des revendications précédentes, **caractérisé en ce que** le moyen de retenue (9a) est réalisé de façon télescopique et un poussoir télescopique est réalisé de manière à céder élastiquement.

7. Système de contrôle de véhicule automobile selon l'une au moins des revendications précédentes, **caractérisé en ce qu'**un second moyen de contrôle à rouleau (2b) comprend au moins deux rouleaux (3) d'axe parallèle agencés dans un cadre (10), l'un au moins des rouleaux pouvant être entraîné.

8. Système de contrôle de véhicule automobile selon l'une au moins des revendications précédentes, **caractérisé en ce que** le cadre (10) du second moyen de contrôle à rouleau (2b) est monté mobile en direction verticale, de sorte qu'une distance des rouleaux (3) par rapport à une surface (6a) du rail de roulement (6) ou d'un sol de garage ou d'un fond de fosse est réglable.

9. Système de contrôle de véhicule automobile selon l'une au moins des revendications précédentes, **caractérisé en ce que** les rouleaux (3a) susceptibles d'être entraînés peuvent être entraînés au moyen d'un moteur à tambour (11) qui est agencé à l'intérieur des rouleaux (3a), et
le moyen de retenue (9a) et le cadre (10) sont variables vis-à-vis de leur position à l'aide de moteurs électriques, de préférence à l'aide de moteurs linéaires.

10. Système de contrôle de véhicule automobile selon l'une au moins des revendications précédentes, **caractérisé en ce qu'**il est prévu un troisième moyen de contrôle à rouleau (2c) qui comprend une bande de roulement (23) agencée horizontalement, une positon verticale de la bande de roulement horizontale (23) étant réglable.

11. Procédé de contrôle d'un véhicule automobile au moyen d'un système de contrôle de véhicule automobile selon l'une au moins des revendications précédentes, comprenant
- une étape consistant à soulever le véhicule automobile au moyen du premier dispositif de soulèvement (1) depuis un rail de roulement (6), un sol de garage ou un fond de fosse au moins aussi loin que les roues (4) du véhicule automobile sont au moins partiellement déchargées, et
- une autre étape consistant à modifier la position verticale et/ou horizontale dudit au moins un rouleau (3a) à entraîner d'au moins un moyen de contrôle à rouleau (2) par déplacement du rouleau (3, 3a) de telle sorte que le rouleau (3, 3a) vient en contact avec une surface de roulement de la roue de véhicule automobile (4), et
- une autre étape consistant à réaliser un contrôle du banc d'essai à rouleau du véhicule automobile, au moins un rouleau (3, 3a) étant en contact avec la surface de roulement d'au moins une roue (4) de véhicule automobile.

12. Procédé pour contrôler un véhicule automobile selon la revendication 11, dans lequel le contrôle du banc d'essai à rouleau inclut au moins l'un des contrôles de l'éclairage de virage dynamique, des freins du véhicule automobile, en particulier du système de freinage antiblocage (ABS), d'un contrôle électrique anti-dérapage, d'un système de régulation anti-patinage et d'un système indirect de contrôle de pression des pneus, et
le véhicule peut être braqué pendant le contrôle et est accéléré jusqu'à une vitesse prédéterminée, et/ou est freiné ou accéléré à l'encontre de l'entraînement.
